# EUROPEAN PATENT SPECIFICATION

(11) **EP 1 723 012 B1**
(45) Date of publication and mention of the grant of the patent: **01.10.2008**
(21) Application number: 05708581.3
(22) Date of filing: 07.03.2005
(51) Int. Cl.: B60R 22/10

(54) **STRAP TENSION INDICATION**
GURTSPANNUNGSANZEIGE
INDICATION DE LA TENSION D'UNE SANGLE

(30) Priority: 12.03.2004 GB 0405550; 11.05.2004 GB 0410457
(43) Date of publication of application: 22.11.2006
(73) Proprietor: BRITAX RÖMER Kindersicherheit GmbH, D-89077 Ulm (DE)
(72) Inventor: WETTER, Herman, 89075 Ulm (DE)
(74) Representative: Ablett, Graham Keith
(86) International application number: PCT/IB2005/000460
(87) International publication number: WO 2005/092676

(56) References cited:
- GB-A- 2 376 925
- US-A- 4 832 410

## Description

The present invention relates to a device for indicating strap tension.

In an automotive child restraint system, typically a child safety seat attached to the adult seat of a car, there is a requirement to tension the straps holding the child into the child seat and/or the strap(s) tethering the child seat in the vehicle. For the former straps, normally this is done by drawing out a central strap, which is attached to and tensions the individual straps, particularly the shoulder straps. In the latter case, tensioning is likely to be by tightening of the strap with a conventional strap adjuster.

Conventional tensioning arrangements have no means by which the user can gauge the tension in the straps, aside from feeling them.

US 4 832 410 discloses a seat belt buckle assembly in which the belt is looped through a pair of sliding members. The sliding members each comprise a spring which urges the sliding members, and hence the buckle connected to the belt, to a retracted position.

GB 2 376 925 discloses a seat belt tension sensing device in which the belt is passed through a housing and over a depressible switch, such that the switch is depressed when a predetermined tension is present in the belt. The switch activates an audible and/or visual alarm.

In this specification, the term "tension indicator" is used to mean a device to indicate absence of slack.

The object of the present invention is to provide an indicator for indicating tension in a restraint strap.

According to the invention, there is provided a safety strap intended to be tensioned in use to a predetermined extent, the strap bearing a resilient member and being characterised in that the resilient member is attached to the strap at first and second positions spaced apart along its length; the resilience of said resilient member and the spacing of said first and second positions being configured to permit the strap and the resilient member to lie adjacent one another when the strap is tensioned to said predetermined extent and to cause the strap to loop away from the resilient member, between said positions, when it is tensioned to a lesser extent; thereby to provide a visual indication of the tension applied to the strap.

It should be understood that by the "ends" of the resilient member is intended not necessarily its terminal ends, but its effective ends in that they represent the points of attachment and transfer of tensile force to the resilient member in use. For instance, in one embodiment, where the resilient member is a length of elastomeric belt stitched to the strap, vestigial pieces between the stitching and the terminal ends perform no part in the stretching of the resilient member to indicate tension in the strap.

The sleeve can be attached to the strap remote from the end of the resilient material. For instance, the resilient material may be attached to the strap via the sleeve. However, the sleeve and the resilient member are preferably stitched together by the same stitching to the strap. Thus in one preferred embodiment:
- the resilient member is an inner member and
- the indicating means is:
   - an outer member attached at its ends to the ends of the resilient member and encasing the resilient inner member, the outer member being provided with
   - at least one opening arranged to open on stretching of the outer member to expose the inner resilient member to view the arrangement being such that with both members having their ends attached to each other and the strap, both the outer and the inner members stretch in use.

In particular:
- the resilient member is a length of resilient material attached at two points along the length of the strap, the points of attachment being further apart in the longitudinal direction of the strap than the free, non-tensioned, length of the resilient material and
- the visual indicating means is a sleeve attached to the strap with the resilient material being accommodated within the sleeve, the sleeve being of a length to cover the resilient material when it is not tensioned;
the arrangement being such that on tensioning of the strap, the resilient material is drawn from the sleeve and being exposed to view indicates that the strap is tensioned.

The sleeve can be provided at either end of the resilient material, or indeed at both ends. If it is attached at one end, it will expose the resilient material at the other end. If it is attached at both ends, the exposure is in the middle.

In another embodiment:
- the resilient member is an outer member having a central void and
- the indicating means includes:
   - at least one opening in the resilient outer member and arranged to open on stretching of the outer member and
   - an inner member provided in the void inside the resilient outer member, the inner member being visible through the or each opening when the outer member is in its stretched state.

In one alternative, the inner member is an extensible member having its ends attached to the strap, preferably at the ends of the outer member. Alternatively, the inner member is an inextensible member attached to the strap, preferably at one of its ends to one of the ends of the outer member. Again, the inner member can be captivated within the outer member by the outer member alone.

Preferably, the resilient member is a coil spring, attached to the strap by end eyes, and the indicating member is a peg or rod within the spring. The coil spring can be of the type which is coil bound when under no tension, thereby obscuring the indicating member until tensioned sufficiently to open the coils of the spring.

To help understanding of the invention, two specific embodiments thereof will now be described by way of example and with reference to the accompanying drawings, in which:
Figure 1 is a perspective view of a tension indicator and a strap in accordance with the invention in a relaxed state;
Figure 2 is a similar view of the ind i cator in a tensioned state;
Figure 3 is a view similar to Figure 1 of a second tension indicator and strap of the invention; and
Figure 4 is a view similar to Figure 2 of the second tension indicator.

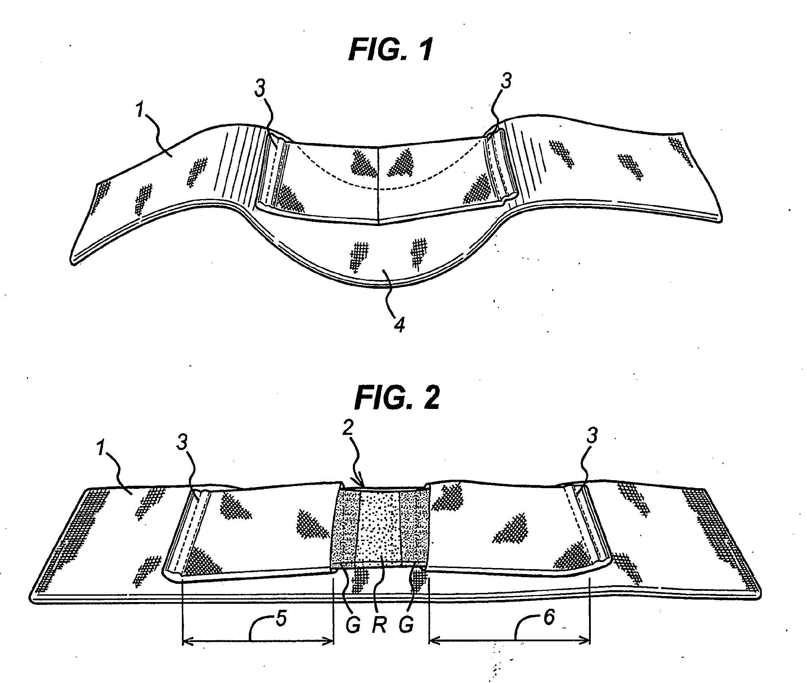

Referring first to Figures 1 & 2 of the drawings, a webbing strap 1 of the type used in a safety harness, e.g. for strapping a child into a safety seat or for tethering a safety seat in a vehicle, has a piece of elastomeric belt 2 stitched 3 to it at two points along its length. The position of the two stitchings along the length of the strap is such that in the relaxed state of the strap, with not tension in either the strap or the belt, the later draws a bight or belly 4 into the strap.

Two lengths 5,6 of sleeving are stitched into the same points 3. The elastomeric belt is threaded within the lengths of sleeving. These are of equal length and jointly extend for the full length of the elastomeric belt in its relaxed state. The sleeving being of a type which does not readily crumple, such as filled and calendered non-woven material, it completely encloses the elastomeric belt when relaxed as shown in Figure 1.

When the elastomeric belt is tensioned, it opens at the joint between the two lengths 5,6 and stretches to a length greater than the sleeving. Thus it becomes exposed to view between the lengths of sleeving, as shown in Figure 2. The extent of stretching of the belt is limited by the distance along the strap between the stitching. Once the strap is straightened, the belt will stretch no more.

The actual tension in the strap, when the belt is fully stretched will be that in belt or more if the strap is carrying tension in parallel to the belt.

The length of the belt and the separation in the strap of the stitching will be chosen to ensure that the belt is fully stretched when the tension has reached the desired level.

This desired level can be indicated simply by the belt being exposed and the belly being pulled out of the strap.

Alternatively, belt can be coloured, whereby the exposed portion is red R for instance when insufficient tension is present, but the length of red colour is limited whereby when the belt is fully tensioned green portions G are exposed on either side of the red portion.

In another alternative, the elastomeric belt can be replaced by a piece of shock cord or indeed a coil spring as the length of resilient material or resilient member.

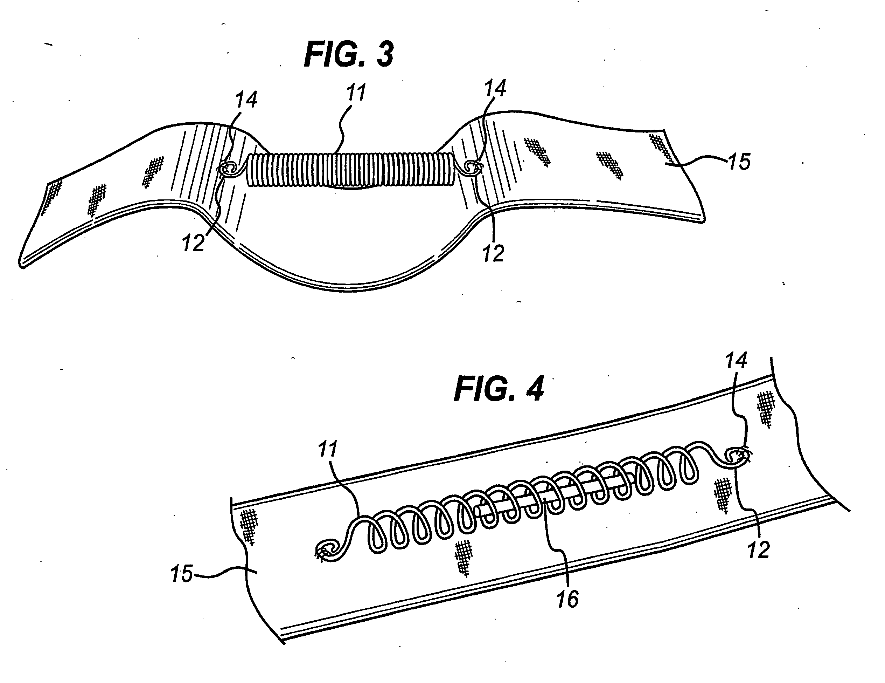

Referring now to Figures 3 and 4, the tension indicator there shown comprises a coil spring 11 of the type that is coil bound, as shown in Figure 3, when carrying no tension. It has eyes 12 at its ends, by which it is stitched 14 to a strap 15. Loose inside the spring, and invisible in Figure 3 when the strap is slack, a peg 16 is enclosed. When the strap is tensioned, the peg becomes visible indicating tension in the strap, in the same way as exposure of the belt indicates tensioning of the strap in Figure 2.

## Claims

1. A safety strap (1, 15) intended to be tensioned in use to a predetermined extent, the strap (1, 15) bearing a resilient member (2, 11) and being **characterised in that** the resilient member (2, 11) is attached to the strap (1, 15) at first and second positions spaced apart along its length; the resilience of said resilient member (2, 11) and the spacing of said first and second positions being configured to permit the strap (1, 15) and the resilient member (2, 11) to lie adjacent one another when the strap (1, 15) is tensioned to said predetermined extent and to cause the strap (1, 15) to loop away from the resilient member (2, 11), between said positions, when it is tensioned to a lesser extent; thereby to provide a visual indication of the tension applied to the strap (1, 15).

2. A safety strap according to claim 1, wherein the first and second positions of the resilient member (2, 11) are its terminal ends.

3. A safety strap according to claim 1, wherein the first and second positions of the resilient member (2, 11) are effective ends spaced from terminal ends by vestigial pieces.

4. A safety strap according to any preceding claim, wherein the resilient member (2, 11) is attached directly to the strap (1, 15).

5. A safety strap according to any one of claims 1 to 3, wherein the resilient member (2, 11) is attached to the strap (1, 15) via intermediate members.

6. A safety strap according to claim 5, wherein the intermediate members form part of a visual indicating means for enhancing the visual indication of the tension applied to the strap.

7. A safety strap according to claim 6, wherein one of the resilient member (2, 11) and the visual indicating means is an inner member at least partially within the other as an outer member.

8. A safety strap according to claim 7, wherein:
• the resilient member is an inner member and
• the indicating means is:
• an outer member attached at its ends to the ends of the resilient member and encasing the resilient inner member, the outer member being provided with
• at least one opening arranged to open on stretching of the outer member to expose the inner resilient member to view
the arrangement being such that with both members having their ends attached to each other and the strap, both the outer and the inner members stretch in use.

9. A safety strap according to claim 7, wherein:
• the resilient member is a length of resilient material (2) attached at two points along the length of the strap, the points of attachment being further apart in the longitudinal direction of the strap than the free, non-tensioned, length of the resilient material (2); and
• the visual indicating means is a sleeve attached to the strap with the resilient material (2) being accommodated within the sleeve (6, 6), the sleeve (5, 6) being of a length to cover the resilient material (2) when it is not tensioned;
the arrangement being such that on tensioning of the strap, the resilient material (2) is drawn from the sleeve (5, 6) and being exposed to view indicates that the strap is tensioned.

10. A safety strap according to claim 9 as appendant to claim 4, wherein the sleeve (5, 6) is attached to the strap remote from the end of the resilient material (2).

11. A safety strap according to claim 9 as appendant to claim 4, wherein the resilient material (2) is attached to the strap via the sleeve (5, 6).

12. A safety strap according to claim 9 or claim 10, wherein the sleeve (5, 6) is provided at one end of the resilient material (2), exposing resilient material (2) at the other end on stretching.

13. A safety strap according to any one of claims 9 to 11, wherein the sleeve (5, 6) is provided at both ends of the resilient material (2), exposing resilient material (2) in the middle on stretching.

14. A safety strap according to any one of claims 9 to 13, wherein the resilient material (2) is self-coloured.

15. A safety strap according to any one of claims 9 to 13, wherein the resilient material (2) is provided with gradations of colour or a marker, to indicate the degree of tension in the strap according to the extent of exposure.

16. A safety strap according to claim 4, wherein:
• the resilient member is an outer member having a central void and
• the indicating means includes:
• at least one opening in the resilient outer member and arranged to open on stretching of the outer member and
• an inner member provide in the void inside the resilient outer member, the inner member being visible through the or each opening when the outer member is in its stretched state.

17. A safety strap according to claim 16, wherein the inner member is an extensible member having its ends attached to the strap, preferably at the ends of the outer member.

18. A safety strap according to claim 16, wherein the inner member is an inextensible member attached to the strap, preferably at one of its ends to one of the ends of the outer member.

19. A safety strap according to claim 16, wherein the inner member is captivated within the outer member by the outer member alone.

20. A safety strap according to any one of claims 16 to 19, wherein the resilient member is a coil spring (11), attached to the strap by end eyes (12), and the indicating member is a peg or rod (16) within the spring (11).

21. A safety strap according to claim 19, wherein the coil spring (11) is of the type which is coil bound when under no tension, thereby obscuring the indicating member until tensioned sufficiently to open the coils of the spring (11).

## Patentansprüche

1. Sicherheitsgurt (1, 15), der im Gebrauch entsprechend einem vorbestimmten Ausmaß angezogen werden soll, und der ein elastisches Element (2, 11) trägt und **dadurch gekennzeichnet ist, dass** das elastische Element (2, 11) an einer ersten und einer zweiten Position entlang der Länge des Gurts (1, 15) an diesem befestigt ist; die Elastizität des elastischen Elements (2, 11) und der Abstand zwischen:der ersten und der zweiten Position so konfiguriert sind, dass es ermöglicht ist, dass der Gurt (1, 15) und das elastische Element (2, 11) benachbart zueinander liegen, wenn der Gurt (1, 15) entsprechend dem vorbestimmten Ausmaß angezogen ist, und um dafür zu sorgen, dass der Gurt (1, 15) zwischen den Positionen vom elastischen Element (2, 11) weg hängt, wenn er in geringerem Ausmaß angezogen ist, um **dadurch** für eine visuelle Anzeige der im Gurt (1, 15) wirkenden Spannung zu sorgen.

2. Sicherheitsgurt nach Anspruch 1, bei dem die erste und die zweite Position des elastischen Elements (2, 11) dessen Abschlussenden sind.

3. Sicherheitsgurt nach Anspruch 1, bei dem die erste und die zweite Position des elastischen Elements (2, 11) effektive Enden sind, die durch Reststücke von den Abschlussenden beabstandet sind.

4. Sicherheitsgurt nach einem der vorstehenden Ansprüche, bei dem das elastische Element (2, 11) direkt am Gurt (1, 15) befestigt ist.

5. Sicherheitsgurt nach einem der Ansprüche 1 bis 3, bei dem das elastische Element (2, 11) über Zwischenelemente am Gurt (1, 15) befestigt ist.

6. Sicherheitsgurt nach Anspruch 5, bei dem die Zwischenelemente Teil einer visuellen Anzeigeeinrichtung zum Verbessern der visuellen Anzeige der im Gurt wirkenden Spannung bilden.

7. Sicherheitsgurt nach Anspruch 6, bei dem eines der elastischen Elemente (2, 11) und die visuelle Anzeigeeinrichtung ein inneres Element bilden, das zumindest teilweise innerhalb des anderen, als äußerem Element, liegt.

8. Sicherheitsgurt nach Anspruch 7, bei dem:
· das elastische Element ein inneres Element ist und
· die Anzeigeeinrichtung Folgendes ist:
· ein äußeres Element, das an seinen Enden an den Enden des elastischen Elements befestigt ist und das elastische innere Element umschließt, wobei das äußere Element mit Folgendem versehen ist:
· mindestens einer Öffnung, die so angeordnet ist, dass sie sich beim Dehnen des äußeren Elements öffnet, um das innere elastische Element so freizulegen, dass es sichtbar ist,
wobei die Anordnung dergestalt ist, dass dann, wenn die beiden Enden der Elemente aneinander und am Gurt befestigt sind, sowohl das äußere als auch das innere Element im Gebrauch gedehnt werden.

9. Sicherheitsgurt nach Anspruch 7, bei dem:
· das elastische Element ein Stück elastischen Materials (2) bildet, das an zwei Punkten entlang der Länge des Gurts befestigt ist, wobei diese Befestigungspunkte: in der Längsrichtung des Gurts weiter voneinander weg liegen; als es der freien, nicht gedehnten Länge des elastischen Materials (2) entspricht; und
· die visuelle Anzeigeeinrichtung eine Manschette (5, 6) ist, die so am Gurt befestigt ist, dass das elastische Material (2) in ihr aufgenommen wird, wobei diese eine solche Länge aufweist, dass sie das elastische Material (2) bedeckt, wenn sie nicht gedehnt ist;
wobei die Anordnung dergestalt ist, dass dann, wenn der Gurt angezogen wird, das elastische Material (2) von der Manschette (5, 6) weggezogen wird und so freigelegt wird, dass es sichtbar wird, was anzeigt, dass der Gurt angezogen ist.

10. Sicherheitsgurt nach Anspruch 9 in Abhängigkeit vom Anspruch 4, bei dem die Manschette (5, 6) am Gurt entfernt vom Ende des elastischen Materials (2) befestigt ist.

11. Sicherheitsgurt nach Anspruch 9 in Abhängigkeit vom Anspruch 4, bei dem das elastische Material (2) über die Manschette (5, 6) am Gurt befestigt ist.

12. Sicherheitsgurt nach Anspruch 9 oder Anspruch 10, bei dem die Manschette (5, 6) an einem Ende des elastischen Materials (2) vorhanden ist, wobei dieses beim Dehnen am anderen Ende freigelegt wird.

13. Sicherheitsgurt nach einem der Ansprüche 9 bis 11, bei dem die Manschette (5, 6) an beiden Enden des elastischen Materials (2) vorhanden ist, um beim Dehnen das elastische Material (2) in der Mitte freizulegen.

14. Sicherheitsgurt nach einem der Ansprüche 9 bis 13, bei dem das elastische Material (2) eine eigene Farbe aufweist.

15. Sicherheitsgurt nach einem der Ansprüche 9 bis 13, bei dem das :elastische Material (2) mit Farbabstufungen oder einer Markierung versehen ist, um das Ausmaß der :Spannung im Gurt entsprechend dem Ausmaß der Freilegung anzuzeigen.

16. Sicherheitsgurt nach Anspruch 4, bei dem:
· das elastische Element ein äußeres Element mit einer zentralen Aussparung ist und
· die Anzeigeeinrichtung Folgendes aufweist:
· mindestens einer Öffnung im elastischen äußeren Element, mit solcher Ausgestaltung, dass beim Dehnen des äußeren Elements: ein Öffnen erfolgt;
· ein inneres Element, das in der Aussparung innerhalb des elastischen äußeren Elements vorhanden ist und durch jede Öffnung hindurch erkennbar ist, wenn sich das äußere Element in seinem gedehntem Zustand befindet.

17. Sicherheitsgurt nach Anspruch 16, bei dem das innere Element ein verlängerbares Element ist, dessen Enden am Gurt, vorzugsweise an den Enden des äußeren Elements, befestigt sind.

18. Sicherheitsgurt nach Anspruch 16, bei dem das innere Element ein nicht verlängerbares Element ist, das am Gurt befestigt ist, und zwar vorzugsweise an einem seiner Enden mit einem der Enden des äußeren Elements.

19. Sicherheitsgurt nach Anspruch 16, bei dem das innere Element alleine durch das äußere Element innerhalb desselben festgehalten wird.

20. Sicherheitsgurt nach einem der Ansprüche 16 bis 19, bei dem das elastische Element eine Schraubenfeder (11) ist, die durch Endaugen (12) am Gurt befestigt ist, und das Anzeigeelement ein Stift oder Stab (16) innerhalb der Feder (11) ist.

21. Sicherheitsgurt nach Anspruch 19, bei dem die Schraubenfeder (11) vom Typ ist, bei dem die Schraube im spannungsfreien Zustand dicht geschlossen ist, um **dadurch** das Anzeigeelement zu verdecken, bis sie ausreichend so unter Spannung steht, dass ihre Windungen geöffnet sind.

## Revendications

1. Courroie de sécurité (1, 15) destinée à être tendue, en cours d'utilisation, jusqu'à un état de tension prédéterminé, la courroie (1, 15) supportant un élément élastique (2, 11) et étant **caractérisée en ce que** l'élément élastique (2, 11) est relié à la courroie (1, 15) en un premier et un deuxième emplacements espacés l'un de l'autre dans le sens de sa longueur; l'élasticité dudit élément élastique (2, 11) et l'espacement entre lesdits premier et deuxième emplacements étant configurés pour permettre à la courroie (1, 15) et à l'élément élastique (2, 11) d'être positionnés de manière adjacente l'un par rapport à l'autre lorsque la courroie (1, 15) est tendue jusqu'audit état de tension prédéterminé et pour provoquer la formation d'une boucle par la courroie (1, 15) à distance de l'élément élastique (2, 11), entre lesdits emplacements, lorsqu'elle est tendue selon un état de tension inférieur ; ceci permettant de fournir une indication visuelle de la tension appliquée à la courroie (1, 15).

2. Courroie de sécurité selon la revendication 1, dans laquelle les premier et deuxième emplacements de l'élément élastique (2, 11) sont les extrémités terminales de celui-ci.

3. Courroie de sécurité selon la revendication 1, dans laquelle les premier et deuxième emplacements de l'élément élastique (2, 11) sont des extrémités utiles espacées des extrémités terminales par des éléments auxiliaires.

4. Courroie de sécurité selon l'une quelconque des revendications précédentes, dans laquelle l'élément élastique (2, 11) est relié directement à la courroie (1, 15).

5. Courroie de sécurité selon l'une des revendications 1 à 3, dans laquelle l'élément élastique (2, 11) est relié à la courroie (1, 15) par l'intermédiaire d'organes intermédiaires.

6. Courroie de sécurité selon la revendication 5, dans laquelle les organes intermédiaires font partie de moyens d'indication visuelle permettant d'améliorer l'indication visuelle de la tension appliquée à la courroie.

7. Courroie de sécurité selon la revendication 6, dans laquelle l'un parmi l'élément élastique (2, 11) et les moyens d'indication visuelle est un élément interne situé au moins partiellement à l'intérieur de l'autre, ce dernier étant un élément externe.

8. Courroie de sécurité selon la revendication 7, dans laquelle :
• l'élément élastique est un élément interne et
• les moyens d'indication sont :
• un élément externe relié par ses extrémités aux extrémités de l'élément élastique et enveloppant l'élément élastique interne, l'élément externe comprenant :
• au moins une ouverture agencée pour s'ouvrir lors de l'allongement de l'élément externe afin de rendre visible l'élément élastique interne,
l'agencement étant tel qu'avec les deux éléments ayant leurs extrémités reliées les unes aux autres et à la courroie, à la fois les éléments externe et interne s'allongent en cours d'utilisation.

9. Courroie de sécurité selon la revendication 7, dans laquelle :
• l'élément élastique est une portion longitudinale d'un matériau élastique (2), relié en deux points dans le sens longitudinal de la courroie, les points de fixation étant en outre davantage distant l'un de l'autre dans la direction longitudinale de la courroie que sur la portion longitudinale libre, non-tendue, du matériau élastique (2) ; et
• les moyens d'indication visuelle sont un manchon relié à la courroie, le matériau élastique (2) étant reçu à l'intérieur du manchon (5, 6), le manchon (5, 6) ayant une longueur permettant de recouvrir le matériau élastique (2) lorsque il n'est pas tendu ;
l'agencement étant tel que lors de la tension de la courroie, le matériau élastique (2) est extrait du manchon (5, 6) et, en étant rendu visible, indique que la courroie est tendue.

10. Courroie de sécurité selon la revendication 9, aussi rattachée à la revendication 4, dans laquelle le manchon (5, 6) est relié à la courroie à distance de l'extrémité du matériau élastique (2).

11. Courroie de sécurité selon la revendication 9, aussi rattachée à la revendication 4, dans laquelle le matériau élastique (2) est relié à la courroie par l'intermédiaire du manchon (5, 6).

12. Courroie de sécurité selon la revendication 9 ou la revendication 10, dans laquelle le manchon (5, 6) est agencé à une extrémité du matériau élastique (2), le matériau élastique (2) étant rendu visible à son autre extrémité lors de l'allongement.

13. Courroie de sécurité selon l'une des revendications 9 à 11, dans laquelle le manchon (5, 6) est agencé aux deux extrémités du matériau élastique (2), le matériau élastique (2) étant rendu visible au niveau de sa partie médiane lors de l'allongement.

14. Courroie de sécurité selon l'une des revendications 9 à 13, dans laquelle le matériau élastique (2) est de couleur unie.

15. Courroie de sécurité selon l'une des revendications 9 à 13, dans laquelle le matériau élastique (2) est équipé de dégradés de couleur ou d'un repère, afin d'indiquer le degré de tension dans la courroie selon le degré de son exposition sur l'extérieur.

16. Courroie de sécurité selon la revendication 4, dans laquelle :
• l'élément élastique est un élément externe ayant un espace formant une ouverture en son centre, et
• les moyens d'indication incluent :
• au moins une ouverture dans l'élément élastique externe et sont agencés pour s'ouvrir lors de l'allongement de l'élément externe, et
• un élément interne agencé dans l'espace formant ouverture à l'intérieur de l'élément élastique externe, l'élément interne étant rendu visible au travers de l'ouverture, ou de chacune d'elles, lorsque l'élément externe est dans un état d'allongement.

17. Courroie de sécurité selon la revendication 16, dans laquelle l'élément interne est un organe extensible ayant ses extrémités reliées à la courroie, de préférence aux extrémités de l'élément externe.

18. Courroie de sécurité selon la revendication 16, dans laquelle l'élément interne est un organe inextensible relié à la courroie, de préférence à l'une de ses extrémités et à l'une des extrémités de l'élément externe.

19. Courroie de sécurité selon la revendication 16, dans laquelle l'élément interne est attiré à l'intérieur de l'élément externe uniquement par l'élément externe.

20. Courroie de sécurité selon l'une des revendications 16 à 19, dans laquelle l'élément élastique est un ressort hélicoïdal (11), relié à la courroie par des parties formant yeux d'extrémité (12), et l'organe d'indication est une pointe ou une tige (16) agencée à l'intérieur du ressort (11).

21. Courroie de sécurité selon la revendication 19, dans laquelle le ressort hélicoïdal (11) est enroulé de manière similaire à une bobine lorsqu'il n'est soumis à aucune tension, dissimulant de ce fait l'organe d'indication jusqu'à ce qu'il soit suffisamment tendu pour ouvrir les spires du ressort (11).
